# EUROPÄISCHE PATENTANMELDUNG

(11) **EP 1 111 957 A2**
(43) Veröffentlichungstag der Anmeldung: **27.06.2001**
(21) Anmeldenummer: 00440321.8
(22) Anmeldetag: 11.12.2000
(51) Int. Cl.: H04Q 11/04, H04L 12/56, H04L 12/64

(54) **Netzwerkknoten zum Vermitteln von digitalen Informationen unterschiedlicher Protokolltypen**

(30) Priorität: 18.12.1999 DE 19961269
(71) Anmelder: ALCATEL, 75008 Paris (FR)
(72) Erfinder: Weis, Bernd X., 70825 Korntal-Münchingen (DE)
(74) Vertreter: Schäfer, Wolfgang, Dipl.-Ing.

(57) **Zusammenfassung**

Es ist ein Netzwerkknoten (10) zum Vermitteln von digitalen Informationen unterschiedlicher Protokolltypen beschrieben. Der Netzwerkknoten (10) weist eine Vielzahl von Modulen (11) auf. Es ist eine Anordnung der Module (11) auf der Grundlage eines Banyan-Matrixtyps vorgesehen. Jedem Modul (11) sind Steuermittel zugeordnet.

## Beschreibung

### Stand der Technik

Die Erfindung geht aus von einem Netzwerkknoten zum Vermitteln von digitalen Informationen unterschiedlicher Protokolltypen mit einer Vielzahl von Modulen. Die Erfindung betrifft ebenfalls ein Verfahren zum Vermitteln von digitalen Informationen unterschiedlicher Protokolltypen, bei dem ein entsprechender Netzwerkknoten vorgesehen ist.

Es ist bekannt, zur synchronen Vermittlung von digitalen Informationspaketen eine sogenannte SDH-Schaltmatrix zu verwenden (SDH = synchrone digitale Hierarchie). Eine derartige SDH-Schaltmatrix enthält eine Vielzahl von Modulen, wobei jedes Modul mit mehreren sogenannten Ports für ankommende oder abgehende Informationsströme versehen ist. Auf diese Weise können ankommende Informationsströme von jedem Port eines Eingangs-Moduls zu jedem Port eines Ausgangs-Moduls weitergeleitet werden.

Es ist ebenfalls bekannt, dass sogenannter ATM- oder IP-Verkehr (ATM = asynchroner Transfermode, IP = Internet-Protokoll) nicht ohne weiteres von einer derartigen SDH-Schaltmatrix vermittelt werden kann. Dies liegt unter anderem an den unterschiedlichen Protokolltypen des ATM-und IP-Verkehrs, insbesondere an dessen asynchroner Übertragung. Bisher sind zur Lösung dieses Problems zusätzliche ATM-Switches und IP-Router erforderlich, die an die SDH-Schaltmatrix angeschlossen werden. Der Hardware-Aufwand und die daraus resultierenden Kosten sind ersichtlich hoch.

### Aufgabe und Vorteile der Erfindung

Aufgabe der Erfindung ist es, einen Netzwerkknoten zum Vermitteln von digitalen Informationen unterschiedlicher Protokolltypen zu schaffen, der einen geringen Hardware-Aufwand und damit geringere Kosten erfordert.

Diese Aufgabe wird bei einem Netzwerkknoten der eingangs genannten Art erfindungsgemäß dadurch gelöst, dass eine Anordnung der Module auf der Grundlage eines Banyan-Matrixtyps vorgesehen ist, und dass jedem Modul Steuermittel zur Verarbeitung von Steuerinformationen zugeordnet sind. Bei einem Verfahren der eingangs genannten Art wird die Aufgabe erfindungsgemäß dadurch gelöst, dass eine Anordnung der Module auf der Grundlage eines Banyan-Matrixtyps vorgesehen ist, dass den Informationen Steuerinformationen hinzugefügt werden, und dass die Informationen in Abhängigkeit von den Steuerinformationen von dem Netzwerkknoten verarbeitet werden.

Bei der Erfindung sind keine zusätzlichen ATM-Switches oder IP-Router erforderlich. Durch die Anwendung des Banyan-Matrixtyps ist es möglich, den SDH-Verkehr, den ATM-Verkehr und den IP-Verkehr über ein und denselben erfindungsgemäßen Netzwerkknoten zu vermitteln. Damit wird wesentlicher Aufwand an Hardware und damit an Kosten eingespart. Insbesondere sind die besonders kostspieligen Verbindungen zwischen den bekannten SDH-Schaltmatrizen und den zusätzlichen ATM-Switches und IP-Routern nicht mehr erforderlich.

Dabei weist der erfindungsgemäße Netzwerkknoten keinerlei funktionellen Nachteile auf. Im Gegenteil, durch die erfindungsgemäße Anwendung des Banyan-Matrixtyps wird ein nicht-blockierendes Netzwerk zur Verfügung gestellt, das ohne weiteres synchronen SDH-Verkehr sowie asynchronen ATM-und IP-Verkehr korrekt vermitteln kann.

Ein weiterer Vorteil der Erfindung besteht darin, dass in dem erfindungsgemäßen Netzwerkknoten ein gemeinsamer Takt für sämtliche Übertragungen verwendet werden kann. Dies vereinfacht die gesamte Struktur und Funktionsweise und führt zu weiteren Kosteneinsparungen.

Die erfindungsgemäß den Informationen hinzugefügten Steuerinformationen dienen dazu, insbesondere den SDH-Verkehr korrekt durch den Netzwerkknoten zu schalten. Mit Hilfe der Steuerinformationen kann auf einfache Weise die synchrone Übertragung des SDH-Verkehrs und dessen korrekte Weiterschaltung in dem Netzwerkknoten erreicht werden.

Bei vorteilhaften Weiterbildungen der Erfindung ist die Verbindung der beiden Eingänge mit den beiden Ausgängen eines Moduls von den Steuermitteln steuerbar und/oder es ist die Speicherung von Informationen in Speichermitteln eines Moduls von den Steuermitteln steuerbar. Hierzu enthalten die Steuerinformationen eine Zielinformation, in deren Abhängigkeit die Informationen in den einzelnen Modulen weitergeschaltet werden. Ebenfalls enthalten die Steuerinformationen eine Speicherinformation, in deren Abhängigkeit die Informationen in den einzelnen Modulen zwischengespeichert werden.

Besonders vorteilhaft ist es, wenn als Speichermittel ein FIFO-Speicher vorgesehen ist. Dies sind einerseits besonders kostengünstige Speicher, die andererseits die korrekte Reihenfolge der abgespeicherten Informationen automatisch beibehalten.

Bei einer vorteilhaften Ausgestaltung der Erfindung sind Verarbeitungsmittel vorgesehen, mit denen den Informationen Steuerinformationen hinzugefügt werden können. Damit ist es insbesondere möglich, die Steuerinformationen für zu übertragenden SDH-Verkehr zu erzeugen und den zugehörigen Informationen hinzuzufügen.

Diese Steuerinformationen werden von den Steuermitteln der einzelnen Module überprüft. In Abhängigkeit von den Steuerinformationen beeinflussen dann die Steuermittel die Funktionsweise der jewiligen Module. Insbesondere steuern die Steuermittel die Weiterschaltung der zu vermittelnden Informationen und/oder die Zwischenspeicherung derselben in Abhängigkeit von den Steuerinformationen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt ein schematisches Blockschaltbild eines Ausführungsbeispiels eines erfindungsgemäßen Netzwerkknotens,
- Figur 2: zeigt eine schematische Darstellung von erfindungsgemäßen Informationen, und
- Figur 3: zeigt ein schematisches Blockschaltbild eines erfindungsgemäßen Netzwerkknotens mit durchgeschalteten Informationen.

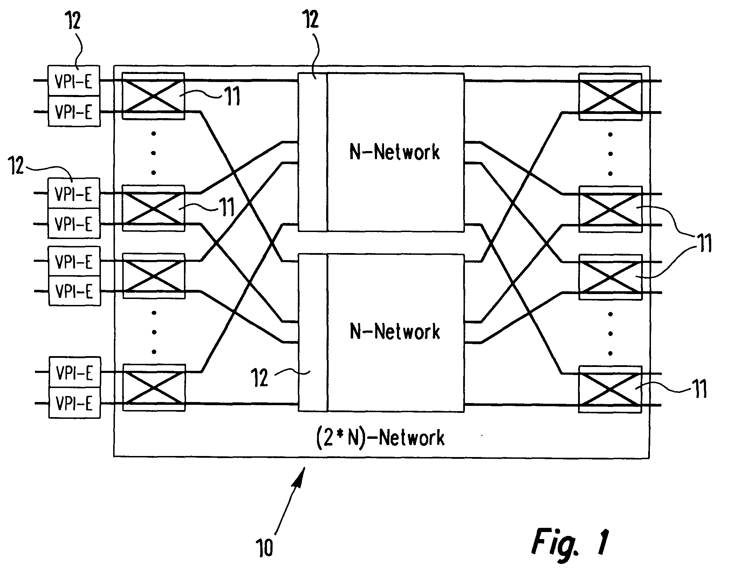

In der Figur 1 ist ein Netzwerkknoten 10 dargestellt, der eine Vielzahl von Modulen 11 aufweist. Der Netzwerkknoten 10 weist N Eingänge und N Ausgänge auf, die auch als sogenannte Ports bezeichnet werden. N ist vorzugsweise eine Zweierpotenz. Bei den einzelnen Modulen 11 handelt es sich um sogenannte 2-Netzwerke, die im mittleren Bereich der Figur 1 zur vereinfachten Darstellung zu zwei N-Netzwerken zusammengefasst sind.

Jedes Modul 11, also jedes 2-Netzwerk, besitzt zwei Eingänge und zwei Ausgänge. Jeder der beiden Eingänge kann mit jedem der beiden Ausgänge verbunden werden. Die Module 11 sind in Stufen angeordnet. Der Netzwerkknoten 10 besitzt M Stufen, wobei gilt: M = ld (N) mit ld = Logarithmus Dualis.

Die Module 11 der aufeinanderfolgenden Stufen des Netzwerkknotens 10 sind auf der Grundlage eines Banyan-Matrixtyps angeordnet und miteinander verbunden. Dies bedeutet folgendes: Die Module 11 der zweiten Stufe sind in zwei Gruppen aufgeteilt. Von den Ausgängen der einzelnen Module 11 der ersten Stufe ist jeweils der eine Ausgang mit einem Modul der einen Gruppe und der andere Ausgang mit einem Modul der anderen Gruppe der zweiten Stufe verbunden. Die Module der dritten Stufe sind in vier Gruppen aufgeteilt, von denen jeweils zwei Gruppen einer der Gruppen der zweiten Stufe zugeordnet sind. Die Module der beiden Gruppen der zweiten Stufe sind dann in entsprechender Weise mit den Modulen der zugehörigen Gruppen der dritten Stufe verbunden. Diese Art der Verbindung zwischen den Modulen der einzelnen Stufen ist bis zu der letzten Stufe fortgesetzt.

Bei dem vorstehend beschriebenen, auf dem Banyan-Matrixtyp basierenden Netzwerkknoten 10 ist insgesamt jeder der Eingänge mit jedem der Ausgänge verbunden. Des Weiteren handelt es sich um ein nicht-blockierendes Netzwerk.

Zur Steuerung der durch den Netzwerkknoten 10 hindurchlaufenden Informationen sind Steuerinformationen vorgesehen. Diese Steuerinformationen sind den Informationen hinzugefügt. Jedes Modul 11 enthält Steuermittel, mit denen die Steuerinformationen der jeweiligen Informationen überprüft und in Abhängigkeit davon die Funktion des Moduls 11 beeinflusst wird.

Die Funktion des Moduls 11 kann dabei von den Steuermitteln auf zweierlei Arten beeinflusst werden. Einerseits können in Abhängigkeit von den Steuerinformationen an einem der beiden Eingänge ankommende Informationen auf einen der beiden Ausgänge des Moduls weitergeschaltet werden. Andererseits können ankommende Informationen in Speichermitteln des Moduls 11 zwischengespeichert werden. Bei den Speichermitteln handelt es sich dabei insbesondere um einen FIFO-Speicher (First-In-First-Out-Memory).

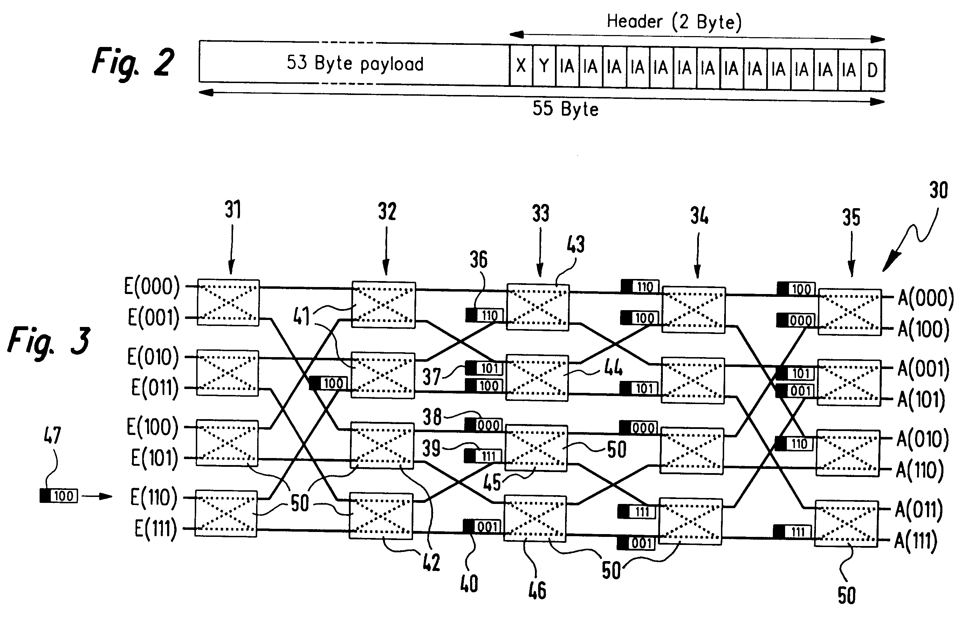

In der Figur 2 sind digitale Informationen in der Form eines Informationspakets dargestellt, das aus zwei Teilen besteht. In einem ersten Teil, der beispielhaft 53 Bytes lang ist, ist eine sogenannte Payload enthalten. Dabei handelt es sich um diejenigen Daten, deren Übertragung von einem Nutzer gewünscht wird. In einem zweiten Teil, der beispielhaft 2 Bytes lang ist, ist ein sogenannter Header enthalten. Dabei handelt es sich um die bereits erwähnten Steuerinformationen. Die Gesamtlänge des Informationspakets ist damit 55 Bytes.

Der Header des Informationspakets der Figur 2 weist ein Bit D auf, das eine Speicherinformation darstellt. Dieses Bit D gibt an, ob es sich um eine synchrone oder eine asynchrone Übertragung handelt. Das Bit D charakterisiert damit die Art der Verbindung, nämlich eine sogenannte "circuit switched connection" oder eine sogenannte "packet switched connection". Wenn das Bit D eine asynchrone Übertragung kennzeichnet, kann das zugehörige Informationspaket von dem Modul in den Speichermitteln zwischengespeichert werden. Bei einer synchronen Übertragung ist eine Zwischenspeicherung nicht möglich. Die Entscheidung über eine Zwischenspeicherung wird dabei von den Steuermitteln in Abhängigkeit von dem Bit D durchgeführt.

Des Weiteren weist der Header des Informationspakets der Figur 2 insgesamt dreizehn Bits IA auf, die eine Zielinformation darstellen. Mit Hilfe der Bits IA wird das Ziel, also der erwünschte Ausgang des Netzwerkknotens 10 gekennzeichnet, zu dem das Informationspaket gelangen soll.

Für jede Stufe der rechten Hälfte des Netzwerkknotens 10 ist dabei ein Bit IA als Zielinformation vorhanden. Mit diesem Bit IA kann das Modul 11 der entsprechenden Stufe entscheiden, zu welchem seiner beiden Ausgänge das Informationspaket weiterzuleiten ist.

Insgesamt sind bei dem Informationspaket der Figur 2 dreizehn Bits IA als Zielinformation vorgesehen. Daraus ergeben sich dreizehn Stufen des Netzwerkknotens 10, die von der Zielinformation gesteuert werden können. Dies ist gleichbedeutend mit maximal 8192 adressierbaren Ausgängen des Netzwerkknotens 10.

Der Header des Informationspakets der Figur 2 weist auch noch zwei Bits X und Y auf. Diese können z.B. für Frequenzabstimmungen oder sonstige Signalübertragungen verwendet werden. Insgesamt setzen sich die Steuerinformationen des Headers damit aus der Speicherinformation, der Zielinformation und den beiden Bits X, Y zusammen.

Der Header und damit die Steuerinformationen eines Informationspakets werden gemäß der Figur 1 von Verarbeitungsmitteln 12 erstellt. Bei diesen Verarbeitungsmitteln 12 handelt es sich um sogenannte "VPI-Evaluatoren" (VPI = virtual path identifier). Diese Verarbeitungsmittel 12 können einmalig für den gesamten Netzwerkknoten 10 vorgesehen sein. Vorzugsweise sind die Verarbeitungsmittel 12 jedoch mehrfach vorgesehen, wie dies in der Figur 1 dargestellt ist.

Gemäß der Figur 1 sind immer mehrere Module 11 zusammengefasst, denen dann separate Verarbeitungsmittel 12 zugeordnet sind. So sind insbesondere in der Figur 1 für die beiden N-Netzwerke jeweils separate Verarbeitungsmittel 12 vorhanden. Damit ist es möglich, den Netzwerkknoten 10 durch weitere Module 11 mit zugehörigen Verarbeitungsmitteln 12 beliebig zu erweitern.

Anhand der Figur 3 wird nachfolgend beschrieben, wie ein mit entsprechenden Steuerinformationen versehenes Informationspaket innerhalb eines Netzwerkknotens weitergeschaltet wird.

In der Figur 3 ist ein Netzwerkknoten 30 dargestellt, der fünf Stufen 31, 32, 33, 34, 35 aufweist. Jede der Stufen weist drei Module 50 auf. Die Module 50 der Figur 3 entsprechen den Modulen 11 der Figur 1. Die Module 50 des Netzwerkknotens 30 sind auf der Grundlage eines Banyan-Matrixtyps angeordnet und miteinander verbunden. Die Module 50 enthalten Steuermittel und Speichermittel, wie im Zusammenhang mit der Figur 1 beschrieben.

Auf der linken Seite der Figur 3 sind acht Eingänge des Netzwerkknotens 30 mit "E" und einem jeweils zugehörigen binären Wert gekennzeichnet. In entsprechender Weise sind auf der rechten Seite der Figur 3 acht Ausgänge des Netzwerkknotens 30 mit "A" und jeweils einem zugehörigen binären Wert gekennzeichnet.

Die ersten beiden Stufen 31, 32 des Netzwerkknotens 30 werden zur gleichmäßigen Verteilung, dem sogenannten Balancing, der ankommenden Informationspakete auf die nachfolgenden Module 50 verwendet. Die nachfolgenden drei Stufen 33, 34, 35 des Netzwerkknotens 30 werden zur korrekten Weiterschaltung der Informationspakete, also dem sogenannten Routing, an die durch die Zielinformationen adressierten Ausgänge verwendet.

Nachfolgend wird zuerst das Routing näher erläutert.

In der Mitte der Figur 3 ist ein Informationspaket 36 gezeigt, bei dem die Payload als schwarze Fläche dargestellt ist. Die zu dem Informationspaket 36 zugehörige Zielinformation ist in der Form dreier Bits IA dargestellt. Die anderen Bits IA sowie die übrigen Bits des Headers des Informationspakets 36 sind nicht dargestellt.

Bei dem Informationspaket 36 sind als Zielinformation die Bits "110" angegeben. Damit soll das Informationspaket 36 an den Ausgang A(110) weitergeschaltet werden. Die Bits "110" der Zielinformation werden von den Steuermitteln der Module 50 der nachfolgenden Stufen 33, 34, 35 des Netzwerkknotens 30 überprüft. Aufgrund der Bits "110" wird das Informationspaket 36 von dem obersten Modul 50 der Stufe 33 über das oberste Module 50 der nachfolgenden Stufe 34 zu dem dritten Modul der Stufe 35 und damit korrekterweise zu dem Ausgang A(110) weitergeschaltet. Dabei ist zu beachten, dass die Bits der Zielinformation von rechts nach links von den Steuermitteln verarbeitet werden. Dies bedeutet, dass das Modul 50 der Stufe 33 aufgrund des Bits "0" von seinen Steuermitteln auf seinen oberen Ausgang weitergeschaltet wird, während die Module 50 der nachfolgenden beiden Stufen 34, 35 aufgrund der beiden Bits "1" von ihren Steuermitteln auf ihre unteren Ausgänge weitergeschaltet werden.

Unter dem Informationspaket 36 ist in der Figur 3 ein weiteres Informationspaket 37 dargestellt, das als Zielinformation die Bits "101" besitzt. Dies bedeutet, dass das Informationspaket 37 zu dem Ausgang A(101) weitergeschaltet werden soll. Aufgrund der Bits "101" der Zielinformation wird das Modul 50 der Stufe 33 von seinen Steuermitteln auf seinen unteren Ausgang durchgeschaltet, während das mit diesem unteren Ausgang verbundene Modul 50 der nächsten Stufe 34 von seinen Steuermitteln auf seinen oberen Ausgang weitergeschaltet wird. Schließlich wird das mit dem vorgenannten oberen Ausgang verbundene Modul 50 der Stufe 35 aufgrund des letzten Bits "1" der Zielinformation von seinen Steuermitteln wieder auf seinen unteren Ausgang weitergeschaltet, so dass das Informationspaket 37 letztlich korrekterweise den Ausgang A(101) erreicht.

In entsprechender Weise gelangt ein Informationspaket 38, das als Zielinformation die Bits "000" aufweist, korrekterweise zu dem Ausgang A(000).

Entsprechendes gilt für ein Informationspaket 39, das als Zielinformation die Bits "111" besitzt. In den Stufen 33, 34, 35 wird dieses Informationspaket 39 jeweils auf den unteren Ausgang der Module 50 weitergeschaltet, so dass das Informationspaket 39 letztlich korrekterweise den Ausgang A(111) erreicht.

Bei einem weiteren Informationspaket 40, das als Zielinformation die Bits "001" aufweist, ist wiederum zu beachten, dass die Bits der Zielinformation von rechts nach links von den Steuermitteln verarbeitet werden. Dies bedeutet, dass das Modul 50 der Stufe 33 aufgrund des Bits "1" von seinen Steuermitteln auf seinen unteren Ausgang weitergeschaltet wird, während die Module 50 der nachfolgenden beiden Stufen 34, 35 aufgrund der beiden Bits "0" von ihren Steuermitteln auf ihre oberen Ausgänge weitergeschaltet werden. Insgesamt gelangt damit das Informationspaket 40 korrekterweise zu dem Ausgang A(001).

Jedes bei der Stufe 33 ankommende Informationspaket 36, 37, 38, 39, 40 wird somit von jedem der Module 50 des Netzwerkknotens 30 der Figur 3 hinsichtlich seiner Zielinformation überprüft und in Abhängigkeit davon weitergeleitet. Des Weiteren wird jedes ankommende Informationspaket 36, 37, 38, 39, 40 von den Steuermitteln der Module 50 auch im Hinblick auf seine Speicherinformation überprüft. In Abhängigkeit davon wird das Informationspaket gegebenenfalls in den Speichermitteln des jeweiligen Moduls 50 zwischengespeichert.

Nachfolgend wird nunmehr das Balancing näher erläutert.

In den Modulen 50 der ersten Stufe 31 des Netzwerkknotens 30 werden ankommende neue Informationspakete auf die beiden oberen Module 41 oder die beiden unteren Module 42 der zweiten Stufe 32 verteilt. Die Verteilung wird einerseits in Abhängigkeit von der Zielinformation der neuen Informationspakete vorgenommen, sowie andererseits in Abhängigkeit von den bereits in dem Netzwerkknoten 30 befindlichen Zielinformationen.

Hierzu wird überprüft, wie viele Zielinformationen von bereits in der oberen Hälfte des Netzwerkknotens 30 vorhandenen Informationspaketen sich auf die obere Hälfte der Ausgänge A beziehen, und wie viele auf die untere Hälfte. Ebenfalls wird überprüft, ob sich die Zielinformation des neuen, an einem der Module 50 der ersten Stufe 21 ankommenden Informationspakets auf die obere Hälfte der Ausgänge A bezieht oder auf die untere Hälfte.

### Danach wird folgendes Verfahren durchgeführt:

Wenn für die obere Hälfte der Ausgänge A die Anzahl der auf diese obere Hälfte der Ausgänge A sich beziehenden Zielinformationen größer ist als die Anzahl der auf die untere Hälfte der Ausgänge A sich beziehenden Zielinformationen, und wenn die Zielinformation des neuen Informationspakets sich auf die obere Hälfte der Ausgänge A bezieht, so wird das neue Informationspaket auf eines der beiden unteren Module 42 der zweiten Stufe 32 weitergeschaltet.

Wenn für die obere Hälfte der Ausgänge A die Anzahl der auf die obere Hälfte der Ausgänge A sich beziehenden Zielinformationen größer ist als die Anzahl der auf die untere Hälfte der Ausgänge A sich beziehenden Zielinformationen, und wenn die Zielinformation des neuen Informationspakets sich aber auf die untere Hälfte der Ausgänge A bezieht, so wird das neue Informationspaket auf eines der beiden oberen Module 41 der zweiten Stufe 32 weitergeschaltet. Des Weiteren wird in diesem Fall die Anzahl der sich auf die untere Hälfte der Ausgänge A beziehenden Zielinformationen um Eins erhöht.

Wenn jedoch für die obere Hälfte der Ausgänge A die Anzahl der auf die obere Hälfte der Ausgänge A sich beziehenden Zielinformationen nicht größer ist als die Anzahl der auf die untere Hälfte der Ausgänge A sich beziehenden Zielinformationen, und wenn die Zielinformation des neuen Informationspakets sich auf die obere Hälfte der Ausgänge A bezieht, so wird das neue Informationspaket auf eines der beiden oberen Module 41 der zweiten Stufe 32 weitergeschaltet. Des Weiteren wird in diesem Fall die Anzahl der sich auf die obere Hälfte der Ausgänge A beziehenden Zielinformationen um Eins erhöht.

Und wenn für die obere Hälfte der Ausgänge A die Anzahl der auf die obere Hälfte der Ausgänge A sich beziehenden Zielinformationen wiederum nicht größer ist als die Anzahl der auf die untere Hälfte der Ausgänge A sich beziehenden Zielinformationen, wenn die Zielinformation des neuen Informationspakets sich aber auf die untere Hälfte der Ausgänge A bezieht, so wird das neue Informationspaket auf eines der beiden unteren Module 42 der zweiten Stufe 32 weitergeschaltet.

Dieses Verfahren wird in entsprechender Weise in der zweiten Stufe 32 angewendet. Dort wird das neue Informationspaket entsprechend dem beschriebenen Verfahren von den beiden oberen Modulen 41 der zweiten Stufe 32 auf das oberste, erste Modul 43 oder das darunter angeordnete zweite Modul 44 der dritten Stufe 33 verteilt. Ebenfalls wird das neue Informationspaket entsprechend dem beschriebenen Verfahren von den beiden unteren Modulen 42 der zweiten Stufe 32 auf das dritte Modul 45 oder das darunter angeordnete vierte Modul 45 der dritten Stufe 33 verteilt.

Dieses Verfahren wird nachfolgend anhand eines Beispiels nochmals näher erläutert.

Es wird angenommen, dass ein neues Informationspaket 47 mit den Bits "100" als Zielinformation an dem untersten Modul 50 der ersten Stufe 31 des Netzwerkknotens 30 ankommt. Aufgrund seiner Zielinformation "100" bezieht sich das neu ankommende Informationspaket 47 auf die obere Hälfte der Ausgänge A.

Entsprechend der Figur 3 sind in dem Netzwerkknoten 30 fünf Informationspakete 36, 37, 38, 39, 40 vorhanden. Davon bezieht sich in der oberen Hälfte der Ausgänge A das Informationspaket 37 auf die obere Hälfte der Ausgänge A und das Informationspaket 36 auf die untere Hälfte der Ausgänge A. Für die obere Hälfte der Ausgänge A ist somit im Hinblick auf die Module 50 der Stufen 31, 32, 33 die Anzahl der sich auf die obere Hälfte der Ausgänge A beziehenden Zielinformationen gleich der Anzahl der sich auf die untere Hälfte der Ausgänge A beziehenden Zielinformationen.

Diese Gleichheit wird von dem untersten Modul 50 der ersten Stufe 31 festgestellt. Ebenfalls wird von diesem Modul 50 die Zielinformation "100" des neu ankommenden Informationspakets 47 überprüft. Aufgrund dieser Informationen wird das neu ankommende Informationspaket 47 von dem untersten Modul 50 der ersten Stufe 31 an die obere Hälfte und damit an das zweite Modul 50 der zweiten Stufe 32 weitergeschaltet.

Nunmehr wird von dem zweiten Modul 50 der zweiten Stufe 32 dasselbe Verfahren in entsprechender Weise durchgeführt. Das Verfahren bezieht sich dabei auf die beiden oberen Module 50 der dritten Stufe 33. In der oberen Hälfte dieser beiden Module 50, also in dem obersten Modul 50 ist nur das Informationspaket 36 mit der Zielinformation "110" enthalten. Die Anzahl der sich auf die obere Hälfte der beiden oberen Module 50 beziehenden Zielinformationen ist damit größer als die Anzahl der sich auf die untere Hälfte dieser beiden Module 50 beziehenden Zielinformationen.

Des Weiteren bezieht sich das neue Informationspaket 47 auf die obere Hälfte der beiden oberen Module 50. Damit wird das neue Informationspaket 47 von dem zweiten Modul 50 der zweiten Stufe 32 an die untere Hälfte der beiden oberen Module 50 weitergeschaltet, also zu dem Modul 44 der dritten Stufe 33. Von dort wird es dann entsprechend seiner Zielinformation "100" an den Ausgang A(100) weitergeleitet.

Der anhand der Figuren 1 bis 3 beschriebene Netzwerkknoten 10, 30 kann digitale Informationen unterschiedlicher Protokolltypen übertragen. Insbesondere ist der Netzwerkknoten 10, 30 dazu geeignet, SDH-Verkehr (SDH = synchrone digitale Hierarchie), ATM-Verkehr (ATM = asynchroner Transfermode) und IP-Verkehr (IP = Internet-Protokoll) zu schalten.

Soll von dem Netzwerkknoten 10, 30 SDH-Verkehr weitergeschaltet werden, so erzeugen die Verarbeitungsmittel 12 aus den von dem SDH-Verkehr mitgelieferten Daten die für den Netzwerkknoten 10, 30 erforderlichen Steuerinformationen, also die Header für die Informationspakete des SDH-Verkehrs. Aufgrund des SDH-Verkehrs wird das Bit D der Speicherinformation derart gesetzt, dass eine Zwischenspeicherung in der Netzwerkknoten 10, 30 nicht möglich ist. Die Informationspakete des SDH-Verkehrs werden damit synchron durch den Netzwerkknoten 10, 30 weitergeschaltet.

Soll von dem Netzwerkknoten 10, 30 ATM-Verkehr oder IP-Verkehr weitergeschaltet werden, so weisen die Daten des ATM-Verkehrs oder des IP-Verkehrs bereits Steuerinformationen auf, die weitgehend den für den Netzwerkknoten 10, 30 erforderlichen Steuerinformationen entsprechen. Diese Steuerinformationen werden von den Verarbeitungsmitteln 12 verarbeitet und in den Header der Informationspakete aufgenommen. Die Informationspakete werden dann dmr Netzwerkknoten 10, 30 zugeführt. Da es sich bei ATM-Verkehr und IP-Verkehr um asynchrone Übertragungen handelt, ist das Bit D des Headers derart gesetzt, dass eine Zwischenspeicherung in dem Netzwerkknoten 10, 30 möglich ist.

## Patentansprüche

1. Netzwerkknoten (10, 30) zum Vermitteln von digitalen Informationen unterschiedlicher Protokolltypen mit einer Vielzahl von Modulen (11, 50), dadurch gekennzeichnet, dass eine Anordnung der Module (11, 50) auf der Grundlage eines Banyan-Matrixtyps vorgesehen ist, und dass jedem Modul (11, 50) Steuermittel zur Verarbeitung von Steuerinformationen zugeordnet sind.

2. Netzwerkknoten (10, 30) nach Anspruch 1, dadurch gekennzeichnet, dass jedes Modul (11, 50) nur zwei Eingänge und zwei Ausgänge aufweist, wobei jeder der beiden Eingänge mit jedem der beiden Ausgänge verbunden werden kann.

3. Netzwerkknoten (10, 30) nach Anspruch 2, dadurch gekennzeichnet, dass die Verbindung der beiden Eingänge mit den beiden Ausgängen eines Moduls (11, 50) von den Steuermitteln steuerbar ist.

4. Netzwerkknoten (10, 30) nach einem der Ansprüche 1 bis 3, dadurch gekennzeichnet, dass die Speicherung von Informationen in Speichermitteln eines Moduls (11, 50) von den Steuermitteln steuerbar ist.

5. Netzwerkknoten (10, 30) nach einem der Ansprüche 1 bis 4, dadurch gekennzeichnet, dass als Speichermittel ein FIFO-Speicher vorgesehen ist.

6. Netzwerkknoten (10, 30) nach einem der Ansprüche 1 bis 5, dadurch gekennzeichnet, dass Verarbeitungsmittel (12) vorgesehen sind, mit denen den Informationen Steuerinformationen hinzugefügt werden können.

7. Netzwerkknoten (10, 30) nach Anspruch 6, dadurch gekennzeichnet, dass die Steuermittel von den Steuerinformationen abhängig sind.

8. Verfahren zum Vermitteln von digitalen Informationen unterschiedlicher Protokolltypen, wobei ein Netzwerkknoten (10, 30) mit einer Vielzahl von Modulen (11, 50) vorgesehen ist, dadurch gekennzeichnet, dass eine Anordnung der Module (11, 50) auf der Grundlage eines Banyan-Matrixtyps vorgesehen ist, dass den Informationen Steuerinformationen hinzugefügt werden, und dass die Informationen in Abhängigkeit von den Steuerinformationen von dem Netzwerkknoten (10, 30) verarbeitet wird.

9. Verfahren nach Anspruch 8, dadurch gekennzeichnet, dass die Steuerinformationen eine Zielinformation enthalten, in deren Abhängigkeit die Informationen in den einzelnen Modulen (11, 50) weitergeschaltet werden.

10. Verfahren nach einem der Ansprüch 8 oder 9, dadurch gekennzeichnet, dass die Steuerinformationen eine Speicherinformation enthalten, in deren Abhängigkeit die Informationen in den einzelnen Modulen (11, 50) zwischengespeichert werden.

11. Verfahren nach einem der Ansprüche 8 bis 10, dadurch gekennzeichnet, dass die Steuerinformationen von Steuermitteln der einzelnen Module (11, 50) überprüft werden.
